# EUROPÄISCHE PATENTSCHRIFT

(11) **EP 2 580 975 B1**
(45) Veröffentlichungstag und Bekanntmachung des Hinweises auf die Patenterteilung: **19.03.2014**
(21) Anmeldenummer: 12188072.8
(22) Anmeldetag: 11.10.2012
(51) Int. Cl.: A42B 3/18

(54) **Innenausstattung für einen Helm**
Interior fitting for a helmet
Équipement intérieur pour un casque

(30) Priorität: 13.10.2011 DE 102011084467
(43) Veröffentlichungstag der Anmeldung: 17.04.2013
(73) Patentinhaber: Uvex Arbeitsschutz GmbH, 90766 Fürth (DE)
(72) Erfinder: Schuster, Manfred, 90552 Röthenbach (DE)
(74) Vertreter: Rau, Schneck & Hübner Patentanwälte Rechtsanwälte PartGmbB

(56) Entgegenhaltungen:
- US-A- 5 920 371
- US-A1- 2010 154 093
- US-A1- 2010 157 238

## Beschreibung

Die Erfindung betrifft eine Innenausstattung für einen Helm, insbesondere einen Arbeitsschutzhelm, sowie einen Helm mit einer derartigen Innenausstattung.

Aus der DE 100 29 970 B4 ist ein Schutzhelm mit einer zum Schutz des Schädels dienenden Helmkalotte und einer zur Anlage am Kopf des Helmträgers bestimmten Innenausstattung bekannt. An der Innenausstattung kann eine Brille befestigt sein.

US 2010/0157 238 offenbart ein Stirnband mit einem Schlitten zur Befestigung einer Brille.

Es ist eine Aufgabe der vorliegenden Erfindung, eine Innenausstattung für einen Helm, insbesondere einen Arbeitsschutzhelm, derart zu schaffen, dass eine Befestigung einer Brille, insbesondere einer Schutzbrille, an der Innenausstattung verbessert ist.

Diese Aufgabe wird durch eine Innenausstattung mit den Merkmalen des Anspruchs 1 gelöst. Der Kern der Erfindung besteht darin, dass die Innenausstattung einen Schlitten aufweist, der zur Befestigung einer Brille, insbesondere einer Schutzbrille, im zentralen Bereich deren Nasenauflage dient. Durch die zentrale Befestigung kann der Schlitten insbesondere optisch unauffällig an der Brille befestigt sein. Insbesondere die ästhetische Wirkung der Brille ist durch die Befestigung des Schlittens nicht negativ beeinträchtigt. Insbesondere ermöglicht eine derartige Innenausstattung die Befestigung einer beispielsweise serienmäßigen Brille wie einer Arbeitsschutzbrille, einer Sonnenbrille oder einem Visier, sodass ein Helm mit dieser Innenausstattung durch einen Augenschutz schnell, unkompliziert und insbesondere flexibel aufgerüstet bzw. nachgerüstet werden kann. Eine derartige Innenausstattung kann auch bei einem Motorradhelm, insbesondere einem Jethelm eingesetzt werden. Dadurch, dass die Brille direkt, also unmittelbar mit der Innenausstattung verbunden ist, ist ein direkter Einsatz der Brille am Kopf möglich. Dadurch kann verhindert werden, dass zwischen einer äußeren Helmschale und der Brille ungeschützte Bereiche verbleiben, die ein Verletzungsrisiko für die den Helm tragende Person darstellen. Dadurch, dass die Brille nicht unmittelbar an der Helmschale befestigt, sondern mittelbar über die Innenausstattung mit der Helmschale verbunden ist, werden Krafteinwirkungen auf die Helmschale beispielsweise in Form von Stößen durch Steinschlag durch die Innenausstattung gedämpft. Dadurch kann insbesondere die Gefahr eines Verrutschens der Brille reduziert werden. Da die Brille über die Innenausstattung an der Helmschale befestigt ist, ist ein gleichzeitiges Auf- und Absetzen sowie Tragen des Helms mit der Brille möglich. Der Helm und die daran befestigte Brille bilden eine Einheit. Die Handhabung eines Helms mit einer derartigen Innenausstattung ist vereinfacht und komfortabler. Insbesondere ist es nicht erforderlich, mehrere Gegenstände nacheinander auf- bzw. abzusetzen. Ein Helm mit einer derartigen Innenausstattung kann beispielsweise in einer Notfallsituation schnell aufgesetzt werden.

Eine Innenausstattung mit einem eine sich entlang einer Längsachse erstreckende Längsöffnung aufweisenden Schlitten ermöglicht eine unkomplizierte und schnelle Höhenverstellung des Schlittens.

Eine Innenausstattung derart, dass die Längsöffnung einen Montageabschnitt und einen Höhenverstellabschnitt aufweist, wobei eine senkrecht zur Längsachse orientierte erste Breite des Montageabschnitts größer ist als eine senkrecht zur Längsachse orientierte zweite Breite des Höhenverstellabschnitts, ermöglicht eine schnelle und unkomplizierte Montage sowie Höhenverstellung des Schlittens. Insbesondere kann der Höhenverstellabschnitt mehrere, entlang der Längsachse paarweise gegenüberliegend angeordnete Rastvorsprünge derart aufweist, dass ein senkrecht zur Längsachse orientierter Abstand zwischen zwei gegenüberliegenden Rastvorsprüngen kleiner ist als die Breite des Höhenverstellabschnitts. Eine derartige Innenausstattung ermöglicht eine definierte und insbesondere eine besonders sichere Festlegung einer gewünschten Höhenverstellungsposition des Schlittens an der Innenausstattung.

Eine Innenausstattung nach Anspruch 2 ermöglicht ein Entfernen des Schlittens von der Innenausstattung beispielsweise dann, wenn eine Befestigung der Brille insbesondere aus sicherheitstechnischen Gründen nicht erforderlich ist. Sofern der Schlitten, insbesondere aus ästhetischen Gründen oder einer möglichen Beeinträchtigung des Sichtfelds einer Person, als störend empfunden wird, kann er abgenommen werden. Sobald die Befestigung der Schutzbrille wieder erforderlich ist, kann der Schlitten wieder an der Innenausstattung befestigt werden.

Eine Innenausstattung nach Anspruch 3 ermöglicht eine unkomplizierte und insbesondere schnell durchführbare Befestigung der Brille.

Eine Innenausstattung nach Anspruch 4 ermöglicht eine sichere Befestigung der Brille an dem Schlitten. Insbesondere ist ein Haken des Schlittens korrespondierend zu einer Nasenauflage der Brille ausgeführt.

Eine Innenausstattung nach Anspruch 5 ermöglicht eine sichere Befestigung der Brille an dem Haken und verhindert insbesondere ein unbeabsichtigtes Lösen der Brille von dem Schlitten. Eine derartige Innenausstattung ist insbesondere für einen Helm vorteilhaft, bei dem erhöhte und/oder häufig auftretende Stoßeinwirkungen möglich sind. Ein Lösen der Brille von der Innenausstattung ist auch bei großer und/oder häufiger Stoßbelastung ausgeschlossen.

Eine Innenausstattung nach Anspruch 6 ermöglicht eine sichere und insbesondere ästhetisch vorteilhafte, weil die ästhetische Wirkung der Brille nicht beeinträchtigende, Befestigung der Brille. Dadurch, dass ein Haken die Brille an einer der Person abgewandten Vorderseite umgreift, wird der Haken als Bestandteil der Brille optisch aufgefasst. Ein Betrachter nimmt die Brille als integralen Bestandteil des Helms wahr.

Eine Innenausstattung nach Anspruch 7 ermöglicht eine besonders robuste Befestigung der Brille an der Innenausstattung. Dadurch, dass der Schlitten streifenförmig ausgeführt ist und einen Stabilitätsabschnitt mit einer erhöhten Streifendicke aufweist, ist insbesondere in dem Stabilitätsabschnitt eine erhöhte Stabilität des Schlittens gegeben. Insbesondere in diesem Stabilitätsabschnitt ist ein Versagen des Schlittens beispielsweise durch Bruch infolge äußerer Einwirkungen weniger wahrscheinlich.

Eine Innenausstattung nach Anspruch 8 ermöglicht eine verbesserte Handhabung. Insbesondere ist es durch die Höhenverstellbarkeit möglich, die Höhenposition der Brille gegenüber der Innenausstattung und/oder gegenüber dem Kopf einer Person individuell anzupassen. Eine individuelle Anpassung kann beispielsweise aufgrund unterschiedlicher Kopfgeometrien und insbesondere einer Höhenposition der Augen am Kopf erforderlich sein. Darüber hinaus kann eine individuelle Höhenverstellung mittels des Schlittens infolge der Größe, insbesondere der Höhe, der Brille erforderlich sein.

Eine Innenausstattung nach Anspruch 9 ermöglicht eine unkomplizierte und unmittelbare Befestigung des Schlittens an der Innenausstattung, wobei mindestens ein Befestigungselement sowohl zur Montage als auch zur Höhenverstellung des Schlittens an der Innenausstattung vorgesehen ist. Es ist beispielsweise möglich, dass genau ein Befestigungselement vorgesehen ist, sodass neben der Montage und Höhenverstellung des Schlittens auch eine Verdrehung des Schlittens um eine senkrecht zum Schlitten orientierte Mittellängsachse des Befestigungselements möglich ist. Das Befestigungselement wirkt in diesem Fall als Scharnier. Diese Scharnierfunktion ist insbesondere dann vorteilhaft, wenn der Helm am Kopf der Person verrutscht und eine ursprüngliche Position der Brille gegenüber dem Kopf schnell und unkompliziert wieder hergestellt werden soll. Die Brille kann insbesondere relativ zu den Augen ausgerichtet werden, ohne dass ein Absetzen des Helms erforderlich ist. Es ist auch möglich, mindestens zwei Befestigungselemente vorzusehen, die insbesondere parallel zu der Längsachse der Längsöffnung des Schlittens orientiert sind. Neben der Montage und Höhenverstellung des Schlittens weisen die Befestigungselemente eine Führungsfunktion entlang der Längsachse auf. Insbesondere können unbeabsichtigte und unerwünschte Verkippungen der Brille an der Innenausstattung beispielsweise bei einer Höhenverstellung der Brille ausgeschlossen werden.

Eine Innenausstattung nach Anspruch 10 ermöglicht eine Doppelfunktion des Befestigungselements zur Montage und Höhenverstellung des Schlittens in besonders unkomplizierter Weise. Das Befestigungselement ist in Form eines Kopfbolzens mit einem Höhenverstellteil und einem Montageteil ausgeführt, wobei insbesondere das Höhenverstellteil eine gegenüber dem Montageteil reduzierte, senkrecht zu einer Mittellängsachse des Kopfbolzens orientierte Breite aufweist. Es ist also möglich, den Schlitten über den Montageteil des Befestigungselements aufzustecken und durch Verschieben des Schlittens entlang der Längsachse der Längsöffnung an dem Höhenverstellteil des Befestigungselements in der Höhe zu verstellen. Das Befestigungselement kann beispielsweise auch als Schraube mit einem Außengewinde ausgeführt sein, die insbesondere in ein korrespondierendes Innengewinde an der Innenausstattung eingeschraubt wird. Dadurch ist es beispielsweise möglich, den Schlitten in seiner Höhenposition an der Innenausstattung mit dem Schraubenkopf zu klemmen. Es ist auch möglich, dass die Schraube als selbstschneidende Schraube ausgeführt ist, so dass ein entsprechendes Innengewinde an der Innenausstattung nicht erforderlich ist.

Eine Innenausstattung nach Anspruch 11 ermöglicht eine gesicherte und insbesondere klemmende Anordnung des höhenverstellbaren Schlittens an der Innenausstattung in einer gewünschten Höhenposition. Dabei kann die Breite der Längsöffnung beispielsweise geringfügig kleiner ausgeführt sein als eine Breite des Höhenverstellteils des Befestigungselements, sodass der Schlitten an dem Befestigungselement klemmend fixiert ist. Durch diese klemmende Halterung infolge der Untermaßausführung der Längsöffnung gegenüber dem Befestigungselement ist insbesondere eine stufenlose Höhenverstellung des Schlittens an der Innenausstattung möglich. Es ist auch möglich, dass die Längsöffnung einen senkrecht zur Längsachse orientierten Abstand zwischen zwei gegenüberliegenden Rastvorsprüngen aufweist, der kleiner ist als eine zweite Breite des Höhenverstellabschnitts und der kleiner ist als eine dritte Breite des Höhenverstellteils des Befestigungselements, sodass das Befestigungselement entlang der Längsachse der Längsöffnung gegenüber der gegenüberliegend angeordneten Paaren von Rastausnehmungen gehalten ist.

Eine Innenausstattung nach Anspruch 12 ermöglicht eine erhöhte Variabilität und Flexibilität bei der Verbindung verschiedener Brillen mit der Innenausstattung. Der Schlitten ist zweiteilig ausgeführt und weist ein Schlittenoberteil zur Befestigung an der Innenausstattung und ein Schlittenunterteil zur Befestigung an der Brille auf. Das Schlittenoberteil ist mit dem Schlittenunterteil rastend, aber wieder lösbar miteinander verbunden. Dadurch ist es beispielsweise möglich, zu einem Schlittenoberteil mehrere Schlittenunterteile zur Verfügung zu stellen, wobei jedes Schlittenunterteil derart ausgeführt ist, dass daran jeweils eine unterschiedliche Brille wie beispielsweise eine Sonnenbrille, eine Schutzbrille oder eine Schweißbrille befestigt sein kann. Dazu können die Schlittenunterteile jeweils verschiedene Haken oder andere Befestigungsmittel zur Befestigung der entsprechenden Brillen aufweisen. Jedoch sind die Schlittenunterteile jeweils identisch mit einem Verbindungsmittel zur Verbindung mit dem Schlittenoberteil ausgeführt. Insbesondere ist es möglich, die Schlittenunterteile mit den jeweiligen Brillen vorzumontieren, so dass bei einem Brillenwechsel, die jeweiligen Brillen mit den zugehörigen Schlittenunterteilen ausgewechselt werden können. Dadurch ist der Brillenwechsel vereinfacht. Insbesondere können das Schlittenoberteil und das Schlittenunterteil durch eine Rast-Clip-Verbindung miteinander verbunden sein.

Es ist eine weitere Aufgabe der vorliegenden Erfindung, einen Helm derart zu schaffen, dass eine Befestigung einer Brille daran erleichtert und insbesondere der Tragekomfort des Helms verbessert ist.

Diese Aufgabe ist durch einen Helm mit den Merkmalen nach Anspruch 13 gelöst. Die Vorteile eines derartigen Helms entsprechen den Vorteilen der erfindungsgemäßen Innenausstattung, auf die hiermit verwiesen wird. Weitere Merkmale, Vorteile und Einzelheiten der Erfindung ergeben sich aus der nachfolgenden Beschreibung von zwei Ausführungsbeispielen anhand der Figuren der Zeichnung. Es zeigen:
- Fig. 1: eine perspektivische Darstellung eines Helms mit einem ersten Ausführungsbeispiel einer erfindungsgemäßen Innenausstattung mit einem Schlitten und einer daran befestigten Brille,
- Fig. 2: eine perspektivische Explosionsdarstellung der Innenausstattung und der Brille gemäß Fig. 1,
- Fig. 3: eine Fig. 2 entsprechende Explosionsdarstellung eines Teils der Innenausstattung und der Brille,
- Fig. 4: eine perspektivische Darstellung eines Schlittens gemäß einem zweiten Ausführungsbeispiel mit einer daran befestigten Brille und
- Fig. 5: eine Fig. 4 entsprechende Explosionsdarstellung des Schlittens.

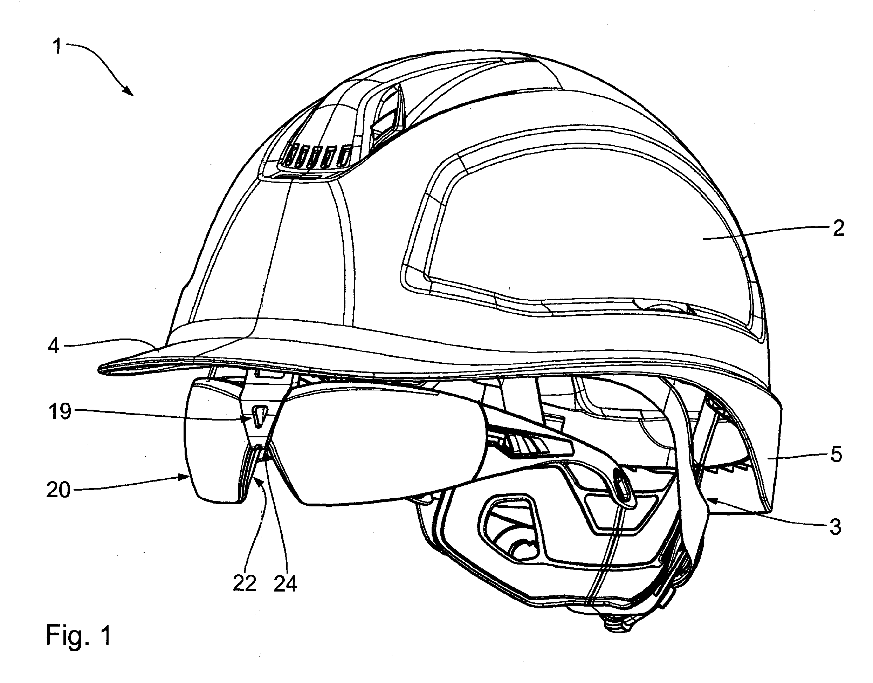

Ein in den Fig. 1 bis 3 dargestellter Helm 1 ist als Arbeitsschutzhelm ausgeführt und weist eine äußere Helmschale 2 und eine an der äußeren Helmschale 2 befestigte Innenausstattung 3 gemäß einem ersten Ausführungsbeispiel der Erfindung auf.

Die äußere Helmschale 2 ist insbesondere aus einem harten und stoßfesten Material und insbesondere aus einem widerstandsfähigen Kunststoff hergestellt. Die äußere Helmschale 2 weist einen vorderen, sich radial von der Stirn einer den Helm 1 tragenden Person wegerstreckenden Schirm 4 und einem dem Schirm 4 an dem Helm 1 gegenüberliegend angeordneten Nackenschutz 5 auf. Der Nackenschutz 5 stellt eine Verlängerung der äußeren Helmschale 2 über den hinteren Schädelbereich bis zum Nacken der Person dar. Der Schirm 4 und der Nackenschutz 5 sind insbesondere einstückig an der äußeren Helmschale 2 angeformt.

Die Innenausstattung 3 ist mehrteilig ausgeführt und weist eine direkt mit der äußeren Helmschale 2 verbundene Trägerschale 6 auf. Die Trägerschale 6 weist mehrere sich gebogen nach unten erstreckende, beinförmige Verbindungsstege 7 auf. Die Trägerschale 6 wird auch als Kopfspinne bezeichnet.

Mit der Trägerschale 6 ist ein Stirnband 8 verbunden. Das Stirnband 8 ist als Zugband ausgeführt dient insbesondere zur Anpassung der Innenausstattung 3 an den Kopfumfang des Helmträgers. Das Stirnband 8 weist insgesamt vier Stege 9 auf, mit welchen das Stirnband 8 an der Trägerschale 6 an jeweils einem Verbindungssteg 7 befestigt ist. Das Stirnband 8 ist zweiteilig ausgeführt und weist einen dem Schirm 4 zugewandten Stirnband-Vorderteil 10 und einen dem Nackenschutz 5 zugewandten Stirnband-Hinterteil 11 auf. Für die Verstellung des Umfangs des Stirnbands 8 weist der Stirnband-Vorderteil 10 eine entlang der Umfangsrichtung des Stirnbands 8 gerichtete Längsnut 12 mit mehreren Rastelementen 13 auf, die mit einem an dem Stirnband-Hinterteil 11 vorgesehenen, nicht näher dargestellten Halteteil derart zusammenwirken, dass der Umfang des Stirnbands 8 in verschiedene Rastpositionen rastend einstellbar ist. Die Stege 9 weisen eine langlochförmige Ausnehmung 14 und einen Rastabschnitt 15 auf, sodass eine veränderliche Befestigung des Stirnbands 8 an der Trägerschale 6 entlang der Ausnehmung 14 mittels eines Rastkopfes 16 der Trägerschale 6 möglich ist. Dazu wird der Rastkopf 16 durch die Ausnehmung 14 im Steg 9 geführt, wobei das Stirnband 8 mittels des Rastabschnitts 15 an dem Verbindungssteg 7 der Trägerschale 6 rastend gehalten ist. Durch die langlochförmige Ausführung der Ausnehmung 14 ist insbesondere ein Verstellweg von bis zu 15 mm zur Anpassung der Innenausstattung 3 an eine Kopfhöhe des Benutzers möglich.

Um den Tragekomfort des Helms 1 zusätzlich zu verbessern, kann eine nicht dargestellte Polsterung vorgesehen sein, die insbesondere an einer der Helmschale 2 abgewandten Innenseite der Innenausstattung 3 zur Anlage an dem Kopf der Person angebracht ist. Es ist auch möglich, dass die Polsterung einstückig mit der Innenausstattung 3 und insbesondere mit dem Stirnband 8 verbunden ist. Die Polsterung ist insbesondere aus geschäumtem Kunststoff hergestellt.

In einem zentralen vorderen Bereich des Stirnband-Vorderteils 10 ist bezüglich einer tangentialen Umfangsrichtung des Stirnbands 8, insbesondere mittig, zwischen den beiden Stegen 9 eine Schlittenbefestigung mit einer Halteplatte 17 und zwei daran einstückig angeformten Befestigungselementen 18, 18a vorgesehen.

Die Innenausstattung 3 umfasst weiterhin einen Schlitten 19. Der Schlitten 19 dient zur Befestigung einer Brille 20 an der Innenausstattung 3. Die Brille 20 ist insbesondere als Schutzbrille ausgeführt und weist zwei Augengläser 21 und eine zwischen den Augengläsern 21 angeordnete Nasenauflage 22 sowie zwei Bügel 23 auf. Der Schlitten 19 ermöglicht die Befestigung der Brille 20 zentral im Bereich deren Nasenauflage 22.

Der Schlitten 19 weist einen Haken 24 zum Einhaken der Brille 20 mit der Nasenauflage 22 auf. Der Haken 24 weist einen unteren Auflagesteg 25 zum Auflegen der Brille 20 mit einem oberen Ende der Nasenauflage 22 und einen Haltesteg 26 zum Halten der Brille 20 an dem Auflagesteg 25 auf. Der Auflagesteg 25 ist V-förmig ausgeführt. Der Haltesteg 26 ist derart an den Auflagesteg 25, insbesondere einstückig, angeformt, dass die Öffnung des V des Auflagestegs 25 zumindest teilweise geschlossen ist. Der Haltesteg 26 ragt in die Öffnung des V des Auflagestegs 25 hinein. Der Haken 24 ist derart ausgeführt, dass er die Brille 20 an der Nasenauflage 22 an einer der Person abgewandten Vorderseite 27 umgreift.

Der Schlitten 19 ist aus Kunststoff und insbesondere aus transparentem Kunststoff hergestellt, sodass die ästhetische Wirkung der zu befestigenden Schutzbrille 20 durch den Schlitten 19 nicht oder nur unwesentlich ästhetisch beeinträchtigt ist.

Der Schlitten 19 ist streifenförmig ausgeführt und weist einen Stabilitätsabschnitt 28 auf, der insbesondere gegenüber den übrigen Abschnitten des Schlittens 19 und insbesondere gegenüber dem Haken 24 eine erhöhte Streifendicke aufweist. Unter Streifendicke ist die Ausdehnung des Streifens senkrecht zu einer durch den Streifen festgelegten Ebene zu verstehen.

Der Haken 24 ist insbesondere elastisch verformbar ausgeführt. Dies kann beispielsweise dadurch erfolgen, dass der Streifen aus einem elastisch, reversibel deformierbaren Kunststoff hergestellt ist. Darüber hinaus wird die elastische Verformbarkeit des Hakens 24 durch eine reduzierte Streifendicke ermöglicht, die insbesondere kleiner ist als 2,0 mm, insbesondere kleiner als 1,5 mm und insbesondere kleiner als 1,0 mm.

Der Schlitten 19 weist eine sich entlang einer Längsachse 29 erstreckende Längsöffnung 30 auf. Die Längsöffnung 30 weist einen Montageabschnitt 31 mit einer senkrecht zur Längsachse 29 orientierten, parallel zur Streifenebene angeordneten ersten Breite b₁ und einen Höhenverstellabschnitt 32 mit einer parallel zur ersten Breite b₁ orientierten zweiten Breite b₂ auf. Die zweite Breite b₂ des Höhenverstellabschnitts 32 ist senkrecht zur Längsachse 29 orientiert und parallel zur Streifenebene angeordnet. Die erste Breite b₁ beträgt 9 mm ist größer als die zweite Breite b₂, die 5 mm beträgt. Insbesondere gilt: b₁ ≥ 1,2 · b₂, insbesondere b₁ ≥ 1,5 · b₂ und insbesondere b₁ ≥ 2,0 · b₂.

Es ist möglich, dass der Höhenverstellabschnitt 32 mehrere, entlang der Längsachse 29 paarweise gegenüberliegend angeordnete, nicht dargestellte Rastvorsprünge derart aufweist, dass ein senkrecht zur Längsachse 29 orientierter Abstand zwischen zwei gegenüberliegenden Rastvorsprüngen kleiner ist als die zweite Breite b₂ des Höhenverstellabschnitts 32.

Der Montageabschnitt 31 weist eine parallel zur Längsachse 29 orientierte Länge l₁ von 15 mm auf, die kleiner ist als ein parallel zur Längsachse 29 orientierte Länge l₂ des Höhenverstellabschnitts 32, die 50 mm beträgt. Insbesondere gilt: l₂ ist ≥ 2 · l₁, insbesondere l₂ ≥ 3 · 11 und insbesondere l₂ ≥ 4 · l₁. Dadurch ist ein Bereich der Höhenverstellung des Schlittens 19 an der Innenausstattung 3 vergrößert.

Zwischen dem Höhenverstellabschnitt 32 und dem Montageabschnitt 31 ist ein Übergangsabschnitt 33 vorgesehen, innerhalb dessen die erste Breite b₁ auf die zweite Breite b₂ entlang der Längsachse 29 linear reduziert wird. Es sind auch andere, insbesondere nichtlineare Übergänge zwischen den beiden Breiten b₁, b₂ möglich. Insbesondere ist es möglich, dass kein Übergangsabschnitt vorgesehen ist und ein sprunghafter Übergang zwischen den Breiten b₁, b₂ vorgesehen ist.

Die beiden einstückig an der Halteplatte 17 angeformten Befestigungselemente 18, 18a dienen zur Montage und Höhenverstellung des Schlittens 19 an der Innenausstattung 3. Die Befestigungselemente 18, 18a weisen voneinander einen vertikalen Abstand A auf, der parallel zur Längsachse 29 orientiert ist. Der Abstand A ist größer als die erste Länge l₁ des Montageabschnitts 31. Es ist nicht möglich, beide Befestigungselemente 18, 18a durch den Montageabschnitt 31 des Schlittens 19 zu führen. Bei einer ersten Befestigungsvariante wird dadurch sichergestellt, dass nur das untere Befestigungselement 18a in die Längsöffnung 30 eingreift und damit zur Befestigung des Schlittens 19 an der Innenausstattung 3 verwendet wird. Insbesondere bei dieser Befestigungsvariante hat das untere Befestigungselement 18a eine Scharnierfunktion. Eine Mittellängsachse 34 des unteren Befestigungselements 18a bildet dann eine Schwenkachse, um die sich der Schlitten 19 verschwenken lässt. Wenn der Helm 1 schief aufgesetzt wird, kann die am Schlitten 19 befestigte Brille 20 korrekt getragen werden. Au-ßerdem wird auch aufgrund der vorzugsweise schwenkbaren Lagerung des Schlittens 19 nur mittels des unteren Befestigungselements 18a bei einem Stoß auf den Helm 1 eine unerwünschte Kraftübertragung auf die Brille 20 weitgehend unterdrückt.

Die Mittellängsachsen 34 der Befestigungselemente 18, 18a erstrecken sich jeweils senkrecht von der Halteplatte 17 der Innenausstattung 3, d.h. die Befestigungselemente 18, 18a erstrecken sich senkrecht von der Innenausstattung 3. Die Mittellängsachsen 34 sind senkrecht zur Streifenebene des Schlittens 19 orientiert. Entlang der Mittellängsachse 34 weisen die Befestigungselemente 18, 18a ein der Innenausstattung 3 zugewandtes Höhenverstellteil 35 bzw. 35a und ein von der Innenausstattung 3 abgewandtes Montageteil 36 bzw. 36a auf. Das Höhenverstellteil 35, 35a weist eine senkrecht zur Mittellängsachse 34 orientierte dritte Breite b₃ derart auf, dass das Befestigungselement 18 bzw. 18a mit dem Höhenverstellteil 35, 35a an dem Höhenverstellabschnitt 32 der Längsöffnung 30 fixiert ist.

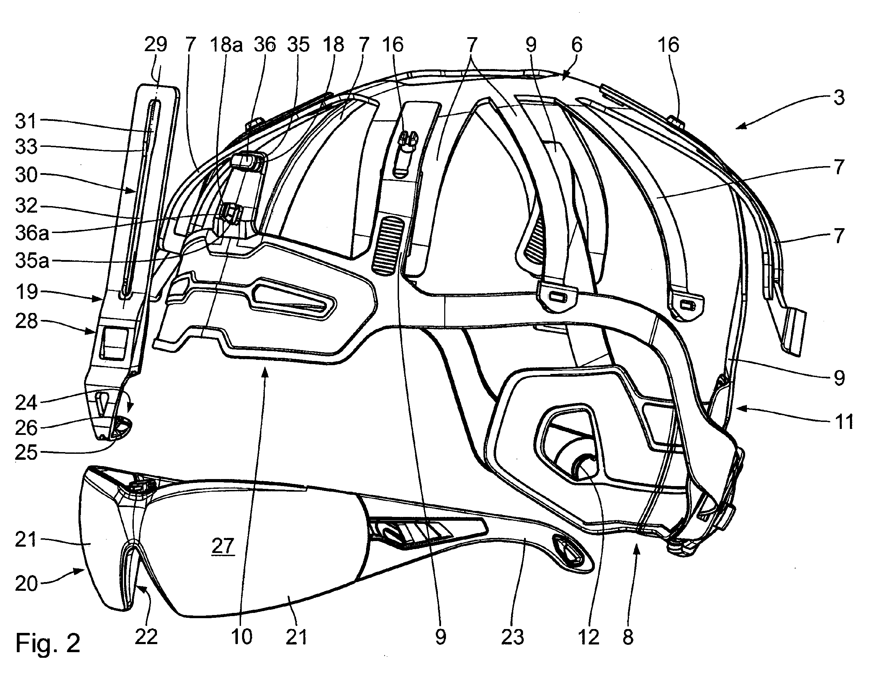

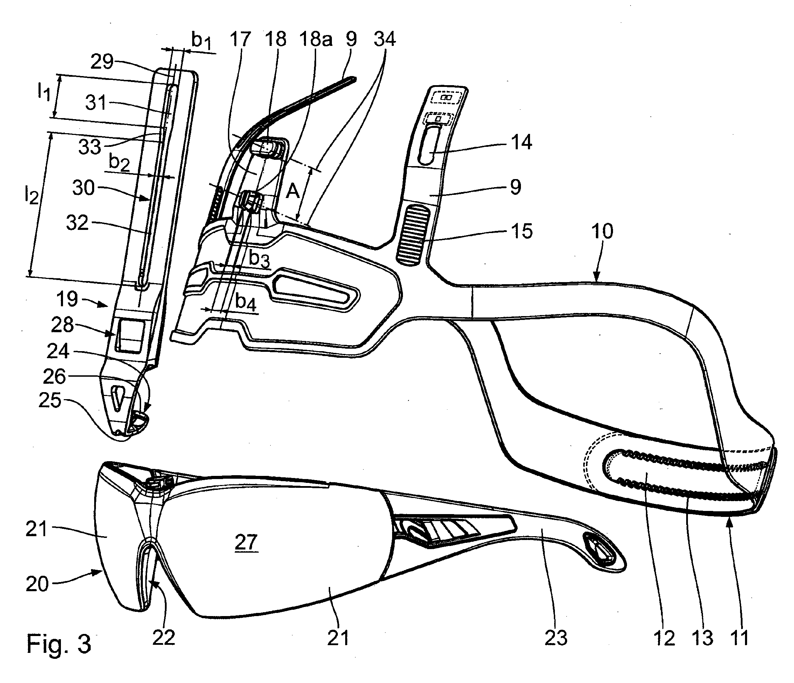

Das Höhenverstellteil 35a des gemäß Fig. 2 und 3 unteren Befestigungselements 18a weist einen senkrecht zur Mittellängsachse 34 runden Querschnitt auf. Die dritte Breite b₃ entspricht dem Durchmesser des Höhenverstellteils 35a und beträgt 3,5 mm.

Es ist auch möglich, dass die zweite Breite b₂ kleiner ist als die dritte Breite b₃ und dass insbesondere gilt: b₂ ≤ 0,9 · b₃, insbesondere b₂ ≤ 0,98 · b₃ und insbesondere b₂ ≤ 0,95 · b₃. Dann ist der Schlitten 19 klemmend an der Innenausstattung 3 gehalten. Gleichzeitig ist eine Höhenverstellung des Schlittens 19 entlang der Längsachse 29 im Bereich des Höhenverstellabschnitts 32 möglich. Zudem ist es möglich, dass der Schlitten 19, insbesondere aufgrund des runden Querschnitts des Höhenverstellteils 35a des unteren Befestigungselements 18a, an dem Befestigungselement 18a um die Mittellängsachse 34 drehbar ist. Das untere Befestigungselement 18a hat also die bereits angesprochene Scharnierfunktion. An dem Montageabschnitt 31 kann der Schlitten 19 von dem unteren Befestigungselement 18a abgenommen werden. Der Schlitten 19 ist lösbar an der Innenausstattung 3 befestigt.

Das Höhenverstellteil 35a des unteren Befestigungselements 18a weist eine entlang der Mittellängsachse 34 orientierte Tiefe auf, die größer ist als eine Streifendicke des Schlittens 19 im Bereich der Längsöffnung 30, insbesondere im Bereich des Höhenverstellabschnitts 32. Dadurch wird die klemmende Fixierung des Schlittens 19 an dem Befestigungselement 18a verstärkt. Die klemmende Wirkung der Fixierung kann durch die Verwendung einer Schraube als Befestigungselement 18a durch Variation einer Einschraubtiefe in die Innenausstattung 3 gezielt eingestellt werden. Es ist auch möglich, dass die Tiefe des Höhenverstellteils 35a im Wesentlichen mit der Streifendicke identisch ist. In diesem Fall ist die Führung der Schlittens 19 bei der Höhenverstellung an der Innenausstattung 3 verbessert. Die vorstehenden Dimensionierungsangaben und Ausgestaltungen können insbesondere auch für das obere Befestigungselement 18 und dessen Höhenverstellteil 35 vorgesehen sein.

Es ist auch möglich, dass der Montageabschnitt 31 derart ausgeführt ist, dass die erste Länge l₁ größer ist als der Abstand A, sodass der Schlitten 19 an beiden Befestigungselementen 18, 18a gleichzeitig befestigt ist. Dies ist eine zweite mögliche Befestigungsvariante, bei der die beiden Befestigungselemente 18, 18a als Linearführung entlang der Längsachse 29 wirken.

Sofern an dem Höhenverstellabschnitt 32 in den Figuren nicht mit dargestellte Rastvorsprünge vorgesehen sind, kann die dritte Breite b₃ zumindest des Höhenverstellteils 35a des unteren Befestigungselements 18a derart gewählt sein, dass der Schlitten 19 mit den Rastvorsprüngen rastend am unteren Befestigungselement 18a gehalten ist. Dies kann grundsätzlich analog auch für das obere Befestigungselement 18 vorgesehen sein.

Das Montageteil 36a des unteren Befestigungselements 18a ist entlang der Mittellängsachse 34 zu dem Höhenverstellteil 35a hin konisch aufweitend ausgeführt und weist eine senkrecht zur Mittellängsachse 34 orientierte, dem Höhenverstellteil 35a zugewandte vierte Breite b₄ auf. Die vierte Breite b₄ des Montageteils 36a ist größer als die zweite Breite b₂ des Höhenverstellabschnitts 32. Insbesondere gilt b₄ ≥ 1,5 · b₂, insbesondere b₄ ≥ 2,5 · b₂ und insbesondere b₄ ≥ 3 · b₂. Dadurch ist verhindert, dass sich der Schlitten 19 entlang der Mittellängsachse 34 von dem Befestigungselement 18a löst.

Das gemäß Fig. 2 und 3 obere Befestigungselement 18 ist entlang der Mittellängsachse 34 im Wesentlichen T-förmig ausgeführt mit einem Höhenverstellteil 35, der insbesondere identisch ausgebildet ist wie das Höhenverstellteil 35a des unteren Befestigungselements 18a. Das Montageteil 36 des oberen Befestigungselements 18 weist einen bezüglich der Mittellängsachse 34 unrunden Querschnitt auf. Das Montageteil 36 des oberen Befestigungselements 18 weist eine vierte Breite b₄ von z.B. 14 mm auf, wobei die vierte Breite b₄ senkrecht zur Mittellängsachse 34 und senkrecht zu dem Abstand A orientiert ist.

Die Innenausstattung 3 umfasst die Trägerschale 6, das Stirnband 8 und den Schlitten 19. Das Stirnband 8 kann auch einteilig ausgeführt sein. Es ist außerdem möglich, dass die Trägerschale 6, das Stirnband 8 eine gegebenenfalls vorgesehene Polsterung einteilig, d.h. einstückig, ausgeführt sind.

Es ist zudem möglich, dass der Schlitten 19 entlang der Längsachse 29 höhenverstellbar an der Innenausstattung 3, jedoch unlösbar, beispielsweise durch Zwei-Komponenten-Spritzguss mit der Innenausstattung 3 verbunden ist. In diesem Fall weist der Schlitten 19 keinen Montageabschnitt 31 auf, sodass ein Demontieren des Schlittens 19 von der Innenausstattung 3 unmöglich ist.

Im Folgenden wird für die zweite Befestigungsvariante die Montage des Schlittens 19 an der Innenausstattung 3 beschrieben. Der Schlitten 19 wird mit dem Montageabschnitt 31 der Längsöffnung 30 auf das obere Befestigungselement 18 entlang der Mittellängsachse 34 gesteckt. Dazu wird der Schlitten 19 gegenüber der Anordnung in Fig. 3 um 90° um die Mittellängsachse 34 gedreht, so dass die Längsöffnung 30 des Schlittens 19 parallel zu dem Montageteil 36 des oberen Befestigungselements 18 orientiert ist. Anschließend wird der Schlitten 19 entlang der Mittellängsachse 34 soweit verlagert, bis der Schlitten 19 an der Halteplatte 17 anliegt. Der auf das obere Befestigungselement 18 aufgesteckte Schlitten 19 wird entlang der Längsachse 29 in eine gewünschte Höhenposition verlagert. In dieser Höhenposition wird der Schlitten 19 mit der Längsöffnung 30 über das untere Befestigungselement 18a gedrückt, so dass das untere Befestigungselement 18a mit dem Höhenverstellteil 35a in dem Höhenverstellabschnitt 32 der Längsöffnung 30 angeordnet ist. Das Montageteil 36a des unteren Befestigungselements 18a ist insbesondere geschlitzt ausgeführt, um das Durchdrücken durch die Längsöffnung 30 zu erleichtern. Eine Fixierung des Schlittens 19 an der Innenausstattung 3 kann in verschiedener Weise erfolgen, insbesondere in einer zu der Streifenebene parallel angeordneten Ebene und/oder entlang der Mittellängsachse 34, also senkrecht zu der Streifenebene. Es ist beispielsweise möglich, dass eine Klemmung des Schlittens 19 an der Innenausstattung 3 aufgrund der gegenüber der dritten Breite b₃ reduzierten zweiten Breite b₂ erfolgt. Es ist weiterhin möglich, dass im Bereich des Höhenverstellabschnitts 32 Rastvorsprünge vorgesehen sind, um ein verrastendes Anliegen zumindest eines der Befestigungselemente 18, 18a zu ermöglichen. Der Höhenverstellabschnitt 32 kann dann zumindest eine Seitenlängswand haben, die zumindest in einem Abschnitt z.B. eine Wellenkontur hat. Der Höhenverstellabschnitt 32 hat dann zumindest in diesem Abschnitt eine insbesondere zyklisch alternierende zweite Breite b₂. Es ist auch denkbar, dass die Tiefe zumindest eines der Höhenverstellteile 35, 35a der Befestigungselemente 18, 18a kleiner ist als die Streifendicke des Schlittens 19 im Bereich des Höhenverstellabschnitts 32 der Längsöffnung 30.

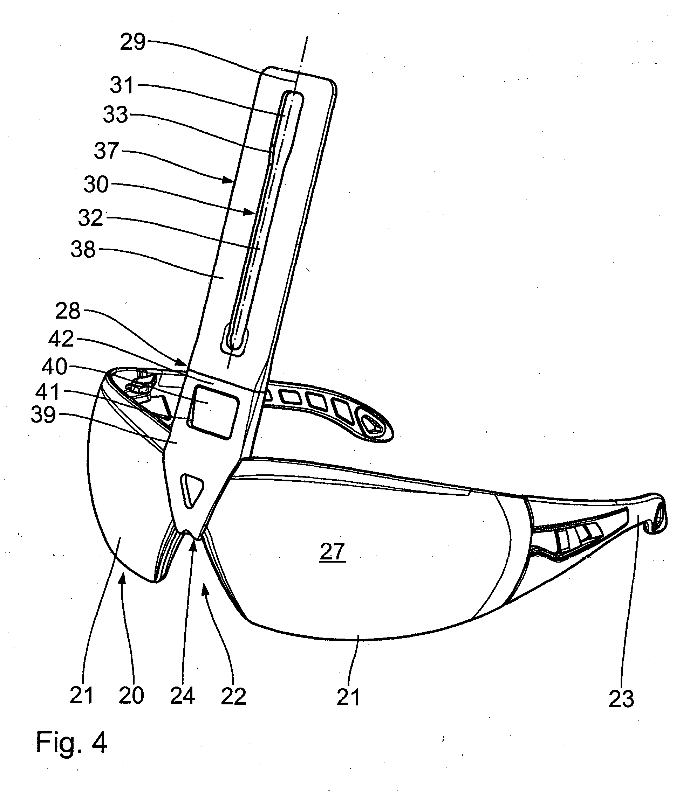

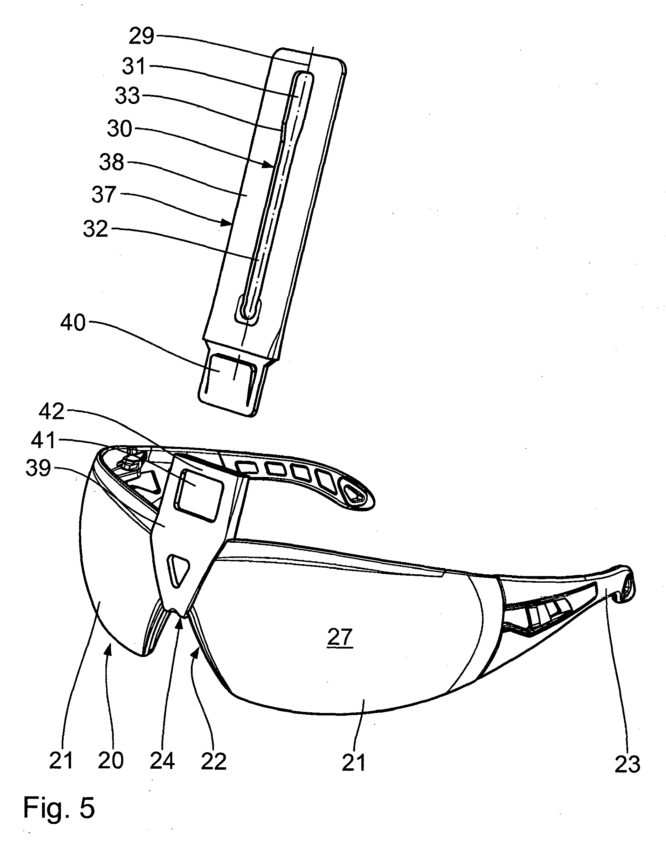

Im Folgenden wird anhand der Fig. 4 und 5 ein weiteres Ausführungsbeispiel der Erfindung beschrieben. Komponenten, die denjenigen entsprechen, die vorstehend unter Bezugnahme auf die Figuren 1 bis 3 entsprechen, erhalten die selben Bezugszeichen und werden nicht nochmals im Einzelnen erläutert.

Der wesentliche Unterschied gegenüber dem ersten Ausführungsbeispiel besteht darin, dass der Schlitten 37 zweiteilig ausgeführt ist mit einem Schlittenoberteil 38 und einem Schlittenunterteil 39. Der Schlitten 37 ist aus Kunststoff hergestellt. Das Schlittenoberteil 38 weist einen federnden Rastknopf 40 als erstes Verbindungsmittel auf, der mit der Rastaufnahme 41 als zweites Verbindungsmittel des Schlittenunterteils 39 zusammenwirkt. In der in Fig. 4 dargestellten Anordnung sind das Schlittenoberteil 38 und das Schlittenunterteil 39 miteinander verbunden. Das Schlittenoberteil 38 ist mit dem Rastknopf 40 in die Rastaufnahme 41 des Schlittenunterteils 39 eingesteckt. Der Rastknopf 40 ist gegenüber der Schlittenebene derart geneigt, dass es einen unteren, die Rastaufnahme 41 begrenzenden Steg 42 hintergreift. Dadurch ist der Rastknopf 40 in der Rastaufnahme 41 gehalten. Der Rastknopf 40 und die Rastaufnahme 41 bilden eine Rast-Clip-Verbindung.

Dadurch, dass der Rastknopf 40 federnd ausgeführt ist, kann er entgegen seiner Neigung gedrückt werden, bis er im Wesentlichen parallel zur Schlittenebene orientiert ist. In dieser Anordnung hintergreift der Rastknopf 40 nicht den Steg 42, so dass das Schlittenoberteil 38 von dem Schlittenunterteil 39 gelöst werden kann. Um die beiden Schlittenteile 38, 39 miteinander zu verbinden, wird der Rastknopf 40 in die Rastaufnahme eingesteckt. Dadurch wird der Rastknopf 40 durch den Steg 42 selbsttätig in Richtung der Schlittenebene gedrückt, bis der Rastknopf 40 vollständig in der Rastaufnahme 41 angeordnet ist und in seine ursprüngliche, geneigte Anordnung zurück federt und damit den Steg 42 hintergreift. Es ist auch möglich, die Schlittenteile 38, 39 in einer anderen Weise miteinander zu verbinden, wobei die Verbindungsmittel insbesondere derart ausgeführt sind, dass eine lösbare, insbesondere rastende, Verbindung des Schlittenoberteils 38 mit dem Schlittenunterteil 39 möglich ist.

Der Rastknopf 40 und die Rastaufnahme 41 sind in dem Stabilitätsabschnitt 28 des Schlittens 37 angeordnet. Die Längsöffnung 30 ist an dem Schlittenoberteil 38 vorgesehen. Das Schlittenoberteil 38 dient zur Befestigung an der Innenausstattung 3. Der Haken 24 ist an dem Schlittenunterteil 39 vorgesehen. Das Schlittenunterteil 39 dient zur Halterung der Brille 20.

## Patentansprüche

1. Innenausstattung für einen Helm, insbesondere einen Arbeitsschutzhelm, mit einem Schlitten (19; 37) zur Befestigung einer Brille (20), insbesondere einer Schutzbrille, zentral im Bereich deren Nasenauflage (22),
wobei der Schlitten (19; 37) eine sich entlang einer Längsachse (29) erstreckende Längsöffnung (30) aufweist, und
wobei die Längsöffnung (30) einen Montageabschnitt (31) und einen Höhenverstellabschnitt (32) aufweist, wobei eine senkrecht zur Längsachse (29) orientierte erste Breite (b₁) des Montageabschnitts (31) grö-ßer ist als eine senkrecht zur Längsachse (29) orientierte zweite Breite (b₂) des Höhenverstellabschnitts (32).

2. Innenausstattung nach Anspruch 1, **dadurch gekennzeichnet, dass** der Schlitten (19; 37) lösbar an der Innenausstattung (3) befestigt ist.

3. Innenausstattung nach einem der vorstehenden Ansprüche, **dadurch gekennzeichnet, dass** der Schlitten (19; 37) einen Haken (24) zum Einhaken der Brille (20) aufweist.

4. Innenausstattung nach Anspruch 3, **dadurch gekennzeichnet, dass** der Haken (24) einen Auflagesteg (25) zum Auflegen der Brille (20), insbesondere mit deren Nasenauflage (22), und einen Haltesteg (26) zum Halten der Brille (20) an dem Auflagesteg (25) aufweist.

5. Innenausstattung nach Anspruch 4, **dadurch gekennzeichnet, dass** der Auflagesteg (25) V-förmig ausgeführt ist, wobei der an den Auflagesteg (25), insbesondere einstückig, angeformte Haltesteg (26) die Öffnung des V zumindest teilweise schließt.

6. Innenausstattung nach einem der Ansprüche 3 bis 5, **dadurch gekennzeichnet, dass** der Haken(24) derart ausgebildet ist, dass er die Brille (20) an einer der Person abgewandten Vorderseite (27) umgreift.

7. Innenausstattung nach einem der vorhergehenden Ansprüche, **dadurch gekennzeichnet, dass** der streifenförmige Schlitten (19; 37) einen Stabilitätsabschnitt (28) mit einer erhöhten Streifendicke aufweist.

8. Innenausstattung nach einem der vorstehenden Ansprüche, **dadurch gekennzeichnet, dass** der Schlitten (19; 37) an der Innenausstattung (3) höhenverstellbar ist.

9. Innenausstattung nach einem der vorstehenden Ansprüche, **gekennzeichnet durch** mindestens ein Befestigungselement (18, 18a) zur Montage und Höhenverstellung des Schlittens (19; 37) an der Innenausstattung (3).

10. Innenausstattung nach Anspruch 9, **dadurch gekennzeichnet, dass** das Befestigungselement (18, 18a) als Kopfbolzen ausgeführt ist und insbesondere sich senkrecht entlang einer Mittellängsachse (34) von der Innenausstattung (3) weg erstreckt, ein der Innenausstattung (3) zugewandtes Höhenverstellteil (35, 35a) und ein von der Innenausstattung (3) abgewandtes Montageteil (36, 36a) aufweist.

11. Innenausstattung nach Anspruch 10, **dadurch gekennzeichnet, dass** das Höhenverstellteil (35, 35a) des Befestigungselements (18, 18a) eine senkrecht zur Längsachse (29) orientierte dritte Breite (b₃) derart aufweist, dass das Befestigungselement(18, 18a) mit dem Höhenverstellteil (35, 35a) am Höhenverstellabschnitt (32) der Längsöffnung (30) fixiert ist.

12. Innenausstattung nach einem der vorstehenden Ansprüche, **dadurch gekennzeichnet, dass** der Schlitten (37) zweiteilig ausgeführt ist mit einem Schlittenoberteil (38) zur Befestigung an der Innenausstattung (3) und einem Schlittenunterteil (39) zur Halterung der Brille (20).

13. Helm, insbesondere Arbeitsschutzhelm, mit
a. einer äußere Helmschale (2) und
b. einer an der äußeren Helmschale (2) befestigten Innenausstattung (3) nach einem der vorstehenden Ansprüche.

## Claims

1. Interior equipment for a helmet, in particular a work safety helmet, with a slide (19; 37) for fastening glasses (20), in particular safety glasses, centrally in the region of the nose pad (22) thereof,
wherein the slide (19; 37) has a longitudinal opening (30) extending along a longitudinal axis (29), and
wherein the longitudinal opening (30) has an assembly portion (31) and a height adjustment portion (32), a first width (b₁) of the assembly portion (31) oriented perpendicular to the longitudinal axis (29) being larger than a second width (b₂) of the height adjustment portion (32) oriented perpendicular to the longitudinal axis (29).

2. Interior equipment according to claim 1, **characterised in that** the slide (19; 37) is releasably fastened to the interior equipment (3).

3. Interior equipment according to any one of the preceding claims, **characterised in that** the slide (19; 37) has a hook (24) for hooking in the glasses (20).

4. Interior equipment according to claim 3, **characterised in that** the hook (24) has a support web (25) for placing the glasses (20), in particular with the nose pad (22) thereof, and a holding web (26) for holding the glasses (20) on the support web (25).

5. Interior equipment according to claim 4, **characterised in that** the support web (25) is V-shaped, the holding web (26) formed on the support web (25), in particular in one piece, closing the opening of the V, at least partially.

6. Interior equipment according to any one of claims 3 to 5, **characterised in that** the hook (24) is configured in such a way that it encompasses the glasses (20) on a front side (27) that faces away from the person.

7. Interior equipment according to any one of the preceding claims, **characterised in that** the strip-like slide (19; 37) has a stability portion (28) with an increased strip thickness.

8. Interior equipment according to any one of the preceding claims, **characterised in that** the slide (19; 37) is height-adjustable on the interior equipment (3).

9. Interior equipment according to any one of the preceding claims, **characterised by** at least one fastening element (18, 18a) for the assembly and height adjustment of the slide (19; 37) on the interior equipment (3).

10. Interior equipment according to claim 9, **characterised in that** the fastening element (18, 18a) is configured as a head bolt and, in particular, extends perpendicularly along a centre longitudinal axis (34) away from the interior equipment (3), has a height adjustment part (35, 35a) facing the interior equipment (3) and an assembly part (36, 36a) that faces away from the interior equipment (3).

11. Interior equipment according to claim 10, **characterised in that** the height adjustment part (35, 35a) of the fastening element (18, 18a) has a third width (b₃) oriented perpendicular to the longitudinal axis (29) in such a way that the fastening element (18, 18a) is fixed with the height adjustment part (35, 35a) on the height adjustment portion (32) of the longitudinal opening (30).

12. Interior equipment according to any one of the preceding claims, **characterised in that** the slide (37) is configured in two parts, with a slide upper part (38) for fastening on the interior equipment (3) and a slide lower part (39) for holding the glasses (20).

13. Helmet, in particular work safety helmet, with
a. an outer helmet shell (2) and
b. an interior equipment (3) fastened to the outer helmet shell (2) according to any one of the preceding claims.

## Revendications

1. Equipement intérieur pour un casque, notamment un casque de protection pour le travail, comprenant un support mobile (19 ; 37) pour la fixation de lunettes (20), notamment de lunettes de protection, centré dans la zone de leur appui nasal (22),
le support mobile (19 ; 37) présentant un orifice longitudinal (30) s'étendant le long d'un axe longitudinal (29), et
l'orifice longitudinal (30) présentant une portion pour le montage (31) et une portion pour le réglage en hauteur (32), une première largeur (b₁) de la portion pour le montage (31), orientée perpendiculairement par rapport à l'axe longitudinal (29), étant plus grande qu'une seconde largeur (b₂) de la portion pour le réglage en hauteur (32), orientée perpendiculairement à l'axe longitudinal (29).

2. Equipement intérieur selon la revendication 1, **caractérisé en ce que** le support mobile (19 ; 37) est fixé sur l'équipement intérieur (3) en pouvant en être détaché.

3. Equipement intérieur selon l'une des revendications précédentes, **caractérisé en ce que** le support mobile (19 ; 37) présente un crochet (24) destiné à accrocher les lunettes (20).

4. Equipement intérieur selon la revendication 3, **caractérisé en ce que** le crochet (24) présente une patte d'appui (25) pour y reposer les lunettes (20), en particulier, à l'aide de leur appui nasal (22), et une patte de maintien (26), pour le maintien des lunettes (20) sur la patte d'appui (25).

5. Equipement intérieur selon la revendication 4, **caractérisé en ce que** la patte d'appui (25) est conçue sous forme d'un V, la patte de maintien (26), façonnée sur la patte d'appui (25), en particulier en formant une pièce unique, obturant au moins partiellement l'orifice en V.

6. Equipement intérieur selon l'une des revendications 3 à 5, **caractérisé en ce que** le crochet (24) est conçu de telle manière que les lunettes (20) entourent en étant en prise sur une face frontale (27) opposée de la personne.

7. Equipement intérieur selon l'une des revendications précédentes, **caractérisé en ce que** le support mobile (19 ; 37) en forme de bande présente une partie de stabilisation (28) possédant une épaisseur de bande plus élevée.

8. Equipement intérieur selon l'une des revendications précédentes, **caractérisé en ce que** le support mobile (19 ; 37) peut être réglé en hauteur sur l'équipement intérieur (3).

9. Equipement intérieur selon l'une des revendications précédentes **caractérisé par** au moins un élément de fixation (18, 18a) pour le montage et le réglage en hauteur du support mobile (19 ; 37) sur l'équipement intérieur (3).

10. Equipement intérieur selon la revendication 9 **caractérisé en ce que** l'élément de fixation (18, 18a) est conçu sous la forme d'un boulon de tête et s'étend en particulier perpendiculairement le long d'un axe central longitudinal (34) en partant de l'équipement intérieur (3), présente une partie pour le réglage en hauteur (35, 35a), orientée vers l'équipement intérieur (3), et une partie pour le montage (36, 36a), opposée à l'équipement intérieur (3).

11. Equipement intérieur selon la revendication 10, **caractérisé en ce que** la partie pour le réglage en hauteur (35, 35a) de l'élément de fixation (18, 18a) présente une troisième largeur (b₃), orientée perpendiculairement par rapport à l'axe longitudinal (29), de sorte que l'élément de fixation (18, 18a) est fixé à l'aide de la partie pour le réglage en hauteur (35, 35a) sur la portion pour le réglage en hauteur (32) de l'orifice longitudinal (30).

12. Equipement intérieur selon l'une des revendications précédentes **caractérisé en ce que** le support mobile (37) est conçu en deux parties comprenant une partie supérieure (38) de support mobile pour la fixation sur l'équipement intérieur (3) et une partie inférieure (39) de support mobile pour le maintien des lunettes (20).

13. Casque, notamment casque de protection pour le travail, comprenant
a. une coque de casque (2) externe et
b. un équipement intérieur (3) selon l'une des revendications précédentes fixé sur la coque de casque (2) externe.
